# EUROPÄISCHE PATENTSCHRIFT

(11) **EP 2 622 337 B1**
(45) Veröffentlichungstag und Bekanntmachung des Hinweises auf die Patenterteilung: **21.11.2018**
(21) Anmeldenummer: 11758484.7
(22) Anmeldetag: 23.09.2011
(51) Int. Cl.: G01N 27/417, F02D 41/14, F23N 5/12

(54) **VERFAHREN ZUR KALIBRIERUNG, VALIDIERUNG UND JUSTIERUNG EINER LAMBDASONDE**
METHOD FOR CALIBRATING, VALIDATING AND ALIGNING A LAMBDA PROBE
PROCÉDÉS D'ÉTALONNAGE, DE VALIDATION ET D'AJUSTEMENT D'UNE SONDE LAMBDA

(30) Priorität: 29.09.2010 DE 102010046954
(43) Veröffentlichungstag der Anmeldung: 07.08.2013
(73) Patentinhaber: Robert Bosch GmbH, 70442 Stuttgart (DE)
(72) Erfinder: WIELAND, Oliver, 35460 Staufenberg (DE); BUCHCZYK, Christian, 35578 Wetzlar (DE)
(86) Internationale Anmeldenummer: PCT/EP2011/066588
(87) Internationale Veröffentlichungsnummer: WO 2012/041777

(56) Entgegenhaltungen:
- EP-A2- 0 770 824
- EP-A2- 0 806 610
- EP-A2- 2 014 985
- DE-A1- 10 332 629
- DE-C1- 10 236 979
- DE-C1- 19 854 824

## Beschreibung

Die Erfindung betrifft ein Verfahren zur Kalibrierung und Validierung einer Lambdasonde entsprechend dem Patentanspruch 1, ein Verfahren zur Justierung einer Lambdasonde entsprechend dem Patentanspruch 11 sowie ein Verfahren zur luftzahlgeregelten Verbrennung eines Brennstoff-Luft-Gemischs entsprechend dem Patentanspruch 13.
Der Erfindung zugrunde liegende Verbrennungsprozesse dienen beispielsweise der Wärmeerzeugung für die Raumheizung oder Trinkwarmwasserbereitung mittels eines Heizgerätes. In der Regel fördert dabei ein Gebläse eine Verbrennungsluft, über ein Brennstoffventil wird Brennstoff zudosiert, in einem Mischraum werden aus Verbrennungsluft und Brennstoff ein Brennstoff-Luft-Gemisch erzeugt, dieses wird einem Brenner zugeführt und unter Flammenbildung verbrannt. Die dabei entstehenden heißen Verbrennungsabgase geben ihre Energie in einem Wärmetauscher an ein Wärmeträgermedium (zumeist Heizungswasser oder Trinkwasser) ab, die abgekühlten Abgase verlassen das Heizgerät durch eine Abgasleitung oder einen Schornstein in die freie Umgebung.
Lambdasonden sind Sensoren, die der Überwachung von Verbrennungsprozessen dienen, indem sie die in einem Abgas eines verbrannten Brennstoff-Luft-Gemischs vorliegende Luftzahl λ messen.
Die Luftzahl λ beschreibt für ein Brennstoff-Luft-Gemisch das Verhältnis einer bei gegebener Brennstoffmenge tatsächlich zur Verfügung stehenden Verbrennungsluftmenge in Bezug auf eine für stöchiometrische Verbrennung benötigte Mindestluftmenge und ist damit einer der zentralen Parameter zur Beschreibung eines Verbrennungsprozesses. Die Luftzahl λ = 1 steht für stöchiometrische Verbrennung, also vollständige Oxidation eines Brennstoffs ohne Luftüberschuss. Gemische mit Luftzahlen λ > 1 heißen überstöchiometrisch bzw. mager, sie weisen mehr Verbrennungsluft auf als für den vollständigen Ausbrand benötigt, im Abgas ist eine gewisse Menge Restsauerstoff vorhanden. Gemische mit Luftzahlen λ < 1 heißen dagegen unterstöchiometrisch bzw. fett, wegen eines Luftmangels können sie nicht vollständig ausbrennen, im Abgas sind unverbrannte und/oder teilweise oxidierte Brennstoffreste vorhanden.

Verbrennungsprozesse, die der Wärmeerzeugung für die Raumheizung oder Trinkwarmwasserbereitung dienen, werden in der Regel bei überstöchiometrischen Soll-Luftzahlen im Bereich λ ≈ 1,1... 1,5 und höher betrieben. Eine Luftzahlregelung soll die Einhaltung einer vorgebbaren Soll-Luftzahl in jedem Betriebspunkt sicherstellen, also beispielsweise bei jedem Modulationspunkt einer variierbaren Feuerungsleistung, bei variierender Temperatur der zugeführten Verbrennungsluft und des zugeführten Brennstoffs, bei unterschiedlichen Gegendrücken im Abgassystem, variierendem Schornsteinzug, usw.

Bei stöchiometrischer bzw. leicht überstöchiometrischer und gleichzeitig homogener Gemischbildung ist ein vollständiger Ausbrand des Brennstoffs gewährleistet. Mit steigender Luftzahl steigt jedoch auch die Luftmenge im Gemisch, die für den Ausbrand gar nicht benötigt wird, die an der eigentlichen Verbrennung nicht beteiligt ist, aber dennoch als Ballast mit erhitzt wird. Dieser unnötige Luftüberschuss senkt die Abgastemperatur und erhöht die Abgasmenge, beide Phänomene verschlechtern unerwünschterweise den Wirkungsgrad des Heizgerätes.

Andererseits wird durch einen unnötigen Luftüberschuss die Abgastaupunkttemperatur abgesenkt, das ist die Temperatur, bei der eine im Abgas vorhandene Feuchtigkeit kondensiert. Bei Wärmetauschern, die nach dem Brennwertprinzip arbeiten, soll möglichst viel dieser Abgasfeuchte kondensieren, weil durch die Kondensation die im Abgas vorhandene, sogenannte Kondensationswärme vom Abgas auf das Wärmeträgermedium (Heizwasser, Trinkwasser) übertragen wird. Ein unnötiger Luftüberschuss mit Absenkung des Abgastaupunkts bedeutet demnach eine Kondensation bei niedrigeren Temperaturen, also verschlechterte Kondensationsbedingungen und Verluste aufgrund geringerer Ausnutzung der Kondensationswärme.

Aus diesen Gründen wird ein möglichst geringer Luftüberschuss, d.h. eine möglichst niedrige überstöchiometrische Luftzahl angestrebt. Um aber eine unterstöchiometrische und unvollständige Verbrennung des Brennstoffs sicher auszuschließen wird die Luftzahl geregelt. Eine Form der Luftzahlregelung stützt sich auf Messwerte, die von einem Sensor generiert werden. Mögliche Sensoren sind unter anderen lonisationselektroden und Lambdasonden.

lonisationselektroden sind so an einem Brenner angeordnet, dass sie in der Flamme liegen. Wird an die flammenberührte lonisationselektrode eine Spannung angelegt, so fließt ein lonisationsstrom, dessen Stärke mit der Luftzahl des Brennstoff-Luft-Gemischs korreliert. Die lonisationsstromstärke (lonisationssignal) zeigt über der Luftzahl einen parabelähnlichen Verlauf, sie hat ein Maximum bei stöchiometrischen Verbrennung, bei unter- und überstöchiometrischer Verbrennung fallen die Werte ab. lonisationselektroden messen also den in der Flamme vorliegenden Flammenwert "Ionisation", generieren ein der Ionisation zugeordnetes sensorabhängiges Signal mit einem Flammensignalwert und geben diesen an ein Regelgerät aus.

Lambdasonden sind in einem Abgasweg eines Heizgerätes angeordnet. Im Gegensatz zu einfachen Lambdasonden, die aufgrund ihrer Kennlinie sinnvollerweise nur zur Einstellung eines stöchiometrischen Betriebspunktes dienen können, sind sogenannte Breitbandlambdasonden für Luftzahlmessungen in einem Bereich von etwa λ ≈ 0,7 und größer (bis reine Luft) geeignet. Damit können Breitbandlambdasonden auch einer Luftzahlregelung von Heizgeräten mit einer Soll-Luftzahl im oben genannten überstöchiometrischen Bereich zugrunde gelegt werden. Lambdasonden messen also den im Abgas einer Verbrennung vorliegenden Abgaswert "Luftzahl", generieren ein der Luftzahl zugeordnetes sensorabhängiges Signal mit einem Abgassignalwert und geben diesen an ein Regelgerät aus. Die Kennlinie ihres Ausgangssignales über der Luftzahl kann in Teilbereichen durch eine Gerade angenähert werden, sie wird vom Hersteller angegeben.

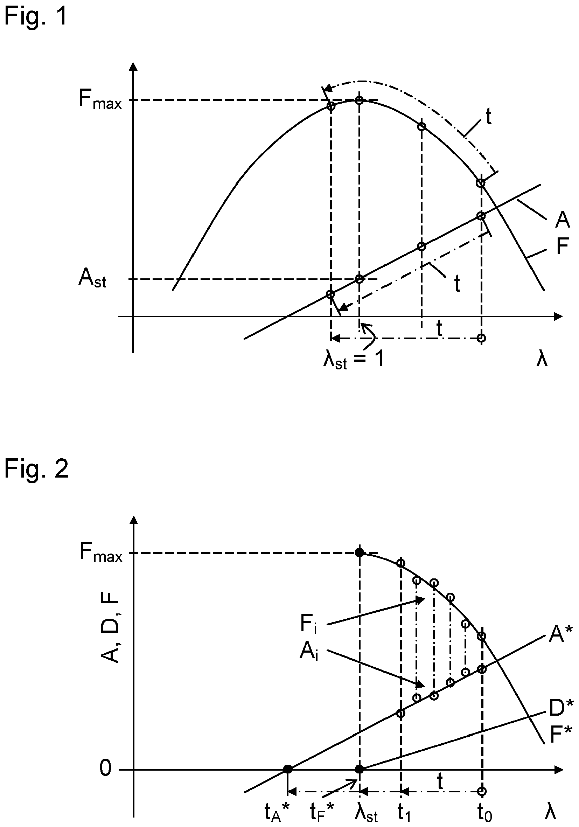

Der parabelähnliche Verlauf des lonisationssignales F über der Luftzahl mit seinem Maximum Fₘₐₓ bei Luftzahl λ = 1 (vergl. Figur 1) ist dafür verantwortlich, dass leicht über- und unterstöchiometrische (allgemein: nahstöchiometrische) lonisationssignale aufgrund der nur geringen Abweichung vom Maximum nur schlecht erkannt werden können. Wenn auch das Maximum gut aufzufinden ist, so kann doch eine nahstöchiometrische Luftzahlregelung, beispielsweise auf eine Soll-Luftzahl λ_{SOLL} = 1,1, nicht zuverlässig realisiert werden.

Die Abgassignale A der Lambdasonde bieten gerade im Bereich der nahstöchiometrischen Verbrennung eine deutlich bessere Auflösung und eignen sich daher besser für die Luftzahlregelung. Allerdings hat die Lambdasonde den Nachteil, dass sich die absoluten Werte ihrer Signale aufgrund von Fertigungseinflüssen oder Alterungserscheinungen etwas verschieben können. Diese Verschiebung betrifft vorrangig einen Offset der Signalwerte, weniger die Steigung eines Signalwerteverlaufs. Dieser Umstand bedingt eine regelmäßige Kalibrierung, Validierung und gegebenenfalls (Neu-) Justierung der Lambdasonde.
Unter Kalibrieren versteht man das Feststellen und Quantifizieren einer Messwertabweichung zwischen einem Prüfling (hier zum Beispiel die Lambdasonde mit zugeordneter Messsignalverarbeitung) und einem Normal (Referenz). Beim Validieren wird die Abweichung zwischen Prüfling und Normal bewertet, das kann eine Feststellung darüber sein, ob der Prüfling unverändert für vorzunehmende Messungen verwendet werden kann, nämlich wenn die Messwertabweichung innerhalb einer zulässigen Toleranz liegt, oder ob eine (Neu-) Justierung des Prüflings zu erfolgen hat, wenn die Abweichung also nicht mehr zulässig ist. Justieren bedeutet die Einstellung bzw. Abgleichung des Prüflings oder seiner Anzeige, so dass eine danach festgestellte Messwertabweichung zum Normal wieder innerhalb einer vorgebbaren zulässigen Toleranz liegt. Eine Justierung kann auch auf der Ebene eines auf einer Datenverarbeitungsanlage arbeitenden Messprogramms erfolgen, zum Beispiel durch programminterne Anpassung von Umrechnungsparametern.
Ein heute schon bekanntes und durchführbares Verfahren zum Kalibrieren und Validieren einer Lambdasonde besteht darin, bei stöchiometrischer Verbrennung den (gegebenenfalls gewandelten) Signalwert der Lambdasonde (Prüfling) mit dem (gegebenenfalls gewandelten) Signalwert einer lonisationselektrode (Normal) zu vergleichen und anhand einer vorgebbaren zulässigen Toleranz zu bewerten. Dazu wird ein überstöchiometrisches Brennstoff-Luft-Gemisch bei laufender Messwerterfassung von Lambdasonde (Abgassignal A) und lonisationselektrode (Flammensignal F) verbrannt und kontinuierlich über der Zeit t mit Brennstoff angereichert (Figur 1). Dies kann durch eine Erhöhung der Brennstoffmenge (des Brennstoffmengenstroms) oder eine Reduzierung der Luftmenge (des Luftmengenstroms) erfolgen. Diese Gemischanfettung führt zunächst zu ansteigenden Flammensignalwerten, dann nach Erreichen eines Maximums zu wieder fallenden Flammensignalwerten. Sobald die Flammensignalwerte wieder fallen wird die Gemischanfettung abgebrochen. Anhand des maximalen Flammensignalwerts wird auf stöchiometrische Verbrennungsverhältnisse geschlossen. Der bei Stöchiometrie gemessene Abgassignalwert bzw. ein aus dem Abgassignalwert in einer angeschlossenen Messwertverarbeitung gewandelter Wert wird mit dem entsprechenden Flammensignalwert bzw. einem aus dem Flammensignalwert in einer angeschlossenen Messwertverarbeitung gewandelten Wert verglichen. Die Abweichung wird bewertet (validiert). Abhängig von der Bewertung werden die Lambdasonde und/oder eventuelle Messprogrammparameter entweder unverändert für den nachfolgenden luftzahlgeregelten Feuerungsbetrieb verwendet (freigegeben) oder neu eingestellt (justiert). Ein entsprechendes Verfahren wird in der DE 103 32 629 offenbart. Nachteilig an dieser Art Kalibrierung und Validierung der Lambdasonde ist neben dem aufwändigen Kalibrierzyklus insbesondere das Anfahren des stöchiometrischen Betriebspunktes. Die Flammen einer stöchiometrischen Verbrennung sind in der Regel kurz, sitzen auf einer Austrittsoberfläche (zum Beispiel Lochblech, Metallgewebe, oder ähnliches) des Brenners auf und überhitzen diese somit. Die Überhitzung kann zu einer Überschreitung maximal zulässiger Austrittsoberflächentemperaturen und zu einer Lebensdauerverkürzung des Brenners führen. Ferner sind die Kohlenmonoxidemissionen sehr hoch, da ein Brennstoff-Luft-Gemisch nie ganz homogen ist. Neben Bereichen überstöchiometrischer Gemischzusammensetzung liegen auch unterstöchiometrische Bereiche vor, wobei in letzteren aufgrund des lokalen Luftmangels nur eine unvollständige Oxidation erfolgt und verstärkt Kohlenmonoxid produziert wird.

Der Erfindung liegt die Aufgabe zugrunde, Verfahren zur Kalibrierung, Validierung und Justierung einer Lambdasonde zu schaffen, die die Nachteile im Stand der Technik überwinden und insbesondere ohne Anfahren des stöchiometrischen Referenzbetriebspunktes zu hinreichend belastbaren Ergebnissen hinsichtlich einer Bewertung und gegebenenfalls (Neu-) Justierung der Lambdasondenfunktion führen.

Erfindungsgemäß wird dies durch die Gegenstände mit den Merkmalen der Patentansprüche 1, 9, 10, 11 und 13 gelöst. Vorteilhafte Weiterbildungen sind den Unteransprüchen zu entnehmen.

Das erfindungsgemäße Verfahren zur Kalibrierung und Validierung einer Lambdasonde mittels einer lonisationselektrode bei einer luftzahlgeregelten Verbrennung eines Brennstoff-Luft-Gemischs stützt sich auf eine Lambdasonde, die Abgaswerte (z.B. die Luftzahl λ) der Verbrennung misst und zugeordnete Abgassignalwerte Aᵢ, die einer Luftzahlregelung dienen, an ein Regelgerät ausgibt. Als Referenz (Normal) stützt sich das Verfahren auf eine lonisationselektrode, die Flammenwerte der Verbrennung misst und zugeordnete Flammensignalwerte Fᵢ, die der Validierung der Lambdasonde dienen, an das Regelgerät ausgibt. Ein Kalibrierzyklus beginnt bei überstöchiometrischer Gemischzusammensetzung und umfasst eine vorübergehende Veränderung der Gemischzusammensetzung. Kennzeichnend für das erfindungsgemäße Verfahren ist, dass während des Kalibrierzyklus, also bei Veränderung der Zusammensetzung des überstöchiometrischen Brennstoff-Luft-Gemischs, aus den erfassten Signalwerten Aᵢ und Fᵢ mindestens ein Kalibrierpunkt (K_{A}*, K_{F}*) und/oder mindestens ein Signalwerteverlauf (A*, F*), die den Bereich der überstöchiometrischen und/oder der stöchiometrischen Verbrennung beschreiben, vorausberechnet werden. Dies kann beispielsweise durch vorausschauende Fortschreibung eines erkannten Trends der Signalwerte Aᵢ und Fᵢ bis zu einer Referenzbedingung erfolgen, ohne dass der Kalibrierzyklus tatsächlich bis zu dieser Referenzbedingung vorangetrieben werden müsste. Referenzbedingung kann beispielsweise die stöchiometrische Verbrennung sein. Aus den messtechnisch erfassten Signalwerten Aᵢ und Fᵢ lässt sich bei geeigneter Auswertung deren Wert oder ein zugeordneter, daraus abgeleiteter Wert unter Referenzbedingung im Voraus erkennen. Anhand des mindestens einen Kalibrierpunkts (K_{A}*, K_{F}*) und/oder des mindestens einen Signalwerteverlaufs (A*, F*) wird eine Validierung der Lambdasonde durchgeführt, indem eine vorausberechnete Abweichung von einem Referenzwert bewertet wird. Bei positiver Validierung, wenn also die vorausberechnete Abweichung als hinreichend gut bewertet wird, wird die Lambdasonde für die luftzahlgeregelte Verbrennung freigegeben, d.h. dass die Lambdasonde im vorliegenden Zustand zur Anwendung kommt. Bei negativer Validierung muss die Lambdasonde zunächst neu justiert werden.

Eine Ausgestaltung des Verfahrens ist dadurch gekennzeichnet, dass die vorübergehende Veränderung der Gemischzusammensetzung während des Kalibrierzyklus eine Anreicherung oder Anfettung des Brennstoff-Luft-Gemischs mit Brennstoff umfasst. Dies kann durch eine Erhöhung der Brennstoffmenge oder durch eine Verringerung der Luftmenge geschehen. Eine mögliche Umsetzung wäre durch eine zeitlich konstante Drehzahlverringerung eines die Verbrennungsluft förderndes Gebläse bei unveränderter Brennstoffmenge (Brennstoffmengenstrom) gegeben.

Eine weitere Ausgestaltung des Verfahrens ist dadurch gekennzeichnet, dass der Brennstoffgehalt während der Anreicherung des Brennstoff-Luft-Gemischs kontinuierlich oder quasi-kontinuierlich und gleichmäßig über der Zeit erhöht wird, zum Beispiel so, dass eine Steigung einer zeitabhängigen Luftzahlfunktion A(t) während der Anfettung konstant ist. Das bedeutet graphisch, dass sich eine Zeitachse linear auf eine Luftzahlachse abbilden lässt. Die Signalwerterfassung kann ebenfalls in gleichbleibender Frequenz erfolgen.

Nach einer Ausgestaltung des Verfahrens ist der mindestens eine Kalibrierpunkt (K_{A}*, K_{F}*) ein vorausberechneter Abgassignalwert Aₛₜ* und/oder Flammensignalwert Fₛₜ*, wie sie voraussichtlich bei stöchiometrischer Verbrennung vorliegen würden. Für die Validierung der Lambdasonde kann dann beispielsweise der vorausberechnete Abgassignalwert Aₛₜ* mit einem laut einer vorliegenden Herstellerangabe erwarteten Abgassignalwert Aₛₜ verglichen werden. Die Abweichung lässt sich anhand einer vorgebbaren zulässigen Abgassignaltoleranz E_{A} bewerten (validieren).

Nach einer anderen Ausgestaltung des Verfahrens ist der mindestens eine Kalibrierpunkt (K_{A}*, K_{F}*) ein vorausberechneter Zeitpunkt (t_{A}*, t_{F}*), bei dem voraussichtlich eine stöchiometrische Verbrennung vorliegen würde. Für die Validierung der Lambdasonde kann dann beispielsweise der vorausberechnete Zeitpunkt t_{A}* mit dem vorausberechneten Zeitpunkt t_{F}* verglichen werden. Die Abweichung lässt sich anhand einer vorgebbaren zulässigen Zeittoleranz Eₜ bewerten.

Eine besonders geeignete Ausgestaltung des Verfahrens ist dadurch gekennzeichnet, dass die Vorausberechnung des mindestens einen Kalibrierpunktes (K_{A}*, K_{F}*) und/oder des mindestens einen Signalwerteverlaufes (A*, F*) die Bildung einer die zeitliche Änderung des Flammensignalwerteverlaufs F* beschreibenden Differentialgleichung oder Differenzengleichung D* umfasst, das entspricht also der ersten Ableitung des Flammensignalwerteverlaufs F* nach der Zeit. Aus dem Stand der Technik ist bekannt, dass ein Flammensignalwerteverlauf einen parabelähnlichen Verlauf über der Luftzahl λ aufweist (Polynom zweiter Ordnung), sein Maximum findet er bei λ = 1. Daraus folgt, dass die Differentialgleichung oder Differenzengleichung D* einen linearen Verlauf aufweist und für stöchiometrische Verbrennungsverhältnisse den Wert Null annimmt, weil sich hier im Maximum Fₘₐₓ der Werteverlauf nicht ändert. Eine Differentialgleichung lässt sich durch die Ableitung des Flammensignalwerteverlaufs F* erzeugen. Eine Differenzengleichung dagegen stützt sich auf eine Abfolge diskreter Flammensignalwert-Zeitwert-Messpunkte, sie gibt die Steigung der Messpunktverbindungslinien (Sehnen) wieder und kann gegebenenfalls auch abschnittsweise über der Zeit definiert sein.

Die Vorausberechnung des mindestens einen Kalibrierpunktes (K_{A}*, K_{F}*) und/oder des mindestens einen Signalwerteverlaufes (A*, F*) stützt sich vorteilhafterweise auf Verfahren der Regressionsanalyse. Mit der nicht-linearen Regression lässt sich aus einer Mehrzahl in etwa parabelförmig verteilter Flammensignalwerte Fᵢ (Punktewolke) ein angenäherter parabelähnlicher Flammensignalwerteverlauf F* bestimmen, daraus dann auch das Maximum Fₘₐₓ. Mittels der einfacher durchzuführenden linearen Regression oder der Ausgleichungsrechnung (z.B. Methode der kleinsten Fehlerquadrate) kann aus einer Mehrzahl von in etwa linear verteilten "Ableitungspunkten" der Flammensignalwerte Fᵢ (Punktewolke um die Differenzengleichung D*) leicht der Verlauf der Gleichung D* sowie deren Nullpunkt ermittelt werden.

Das erfindungsgemäße Verfahren zur Justierung einer Lambdasonde bei einer luftzahlgeregelten Verbrennung eines Brennstoff-Luft-Gemsichs, ist dadurch gekennzeichnet, dass die Justierung im Anschluss an eine Kalibrierung und Validierung nach einem der Ansprüche 1 bis 10 auf der Ebene eines Datenverarbeitungsprogramms erfolgt. Es handelt sich also beispielsweise um eine Einstellung der Lambdasonde auf Software-Ebene. Sie umfasst die Berechnung und Vorgabe mindestens eines Parameters P (beispielsweise eines Justierungsparameters), der in einem der Justierung nachfolgenden luftzahlgeregelten Verbrennungsbetrieb einer programminternen Verarbeitung, also einer Wandlung, Umrechnung, Bewertung und/oder Skalierung der Abgassignalwerte Aᵢ der Lambdasonde zugrunde gelegt wird. Auf diese Weise müssen weder die Lambdasonde noch Lambdasondenkomponenten verändert werden.

Eine geeignete Ausgestaltung des Verfahrens ist dadurch gekennzeichnet, dass der Parameter P aus einem zwischen einer ersten Lamdasondenkennlinie und einer während des Kalibrierzyklus ermittelten zweiten Lambdasondenkennlinie bestehenden Offset ermittelt wird. Die erste Kennlinie kann beispielsweise eine vom Hersteller angegebene Abgassignalkennlinie A sein. Die zweite Kennlinie kann beispielsweise der wie vorstehend beschrieben vorausberechnete Abgassignalwerteverlauf A* sein. Dem Verfahren liegt die Erkenntnis zugrunde, dass sich die Lambdakennlinie A zwar verschieben kann, dass es sich bei der Verschiebung aber vorrangig um einen Offset (Parallelverschiebung) der Kennlinie handelt und weniger um eine Änderung der Kennliniensteigung.

Das erfindungsgemäße Verfahren zur luftzahlgeregelten Verbrennung eines Brennstoff-Luft-Gemischs gründet sich auf eine in einem Abgaseinflussbereich angeordnete Lambdasonde, die Abgaswerte der Verbrennung misst und zugeordnete Abgassignalwerte, die einer Luftzahlregelung zugrunde gelegt werden, ausgibt. Ferner gründet es sich auf eine in einem Flammeneinflussbereich angeordnete lonisationselektrode, die Flammenwerte der Verbrennung misst und zugeordnete Flammensignalwerte, die einer Justierung der Lambdasonde zugrunde gelegt werden, ausgibt. Das Verfahren ist dadurch gekennzeichnet, dass zur Kalibrierung, Validierung und/oder Justierung der Lambdasonde mindestens ein Verfahren nach einem der Ansprüche 1 bis 11 angewendet wird.

Mit der vorstehend beschriebenen Erfindung ist ein gegenüber dem Stand der Technik zeitlich deutlich verkürztes Verfahren zur Kalibrierung, Validierung und Justierung einer Lambdasonde bei einer luftzahlgeregelten Verbrennung eines Brennstoff-Luft-Gemischs beschrieben. Das Verfahren bewegt sich im deutlich überstöchiometrischen Bereich. Nahstöchiometrische und unterstöchiometrische Betriebspunkte werden auf überstöchiometrischer Datenbasis vorausschauend extrapoliert, aber nicht mehr angefahren, weshalb Emissionen unverbrannter oder teilverbrannter Gemischbestandteile vermieden und zentrale Brennerkomponenten aufgrund ausbleibender Überhitzung geschont werden.

Die Zeichnungen stellen mehrere Ausgestaltungsbeispiele der Erfindung dar und zeigen in den Figuren:
- Fig. 1: ein nach dem Stand der Technik bekanntes Verfahren zur Kalibrierung und Validierung einer Lambdasonde,
- Fig. 2: ein erfindungsgemäßes Verfahren zur Kalibrierung und Validierung einer Lambdasonde,
- Fig. 3: ein weiteres erfindungsgemäßes Verfahren zur Kalibrierung und Validierung einer Lambdasonde und
- Fig. 4: ein erfindungsgemäßes Verfahren zur Justierung einer Lambdasonde.

Fig. 1 zeigt den geradenähnlichen Verlauf des Lambdasonden- oder auch Abgassignales A sowie den parabelähnlichen Verlauf des lonisationselektroden- oder auch Flammensignales F über der Luftzahl A, wobei das Flammensignal ein Maximum Fₘₐₓ bei der Luftzahl λ = 1 aufweist. Ein bekanntes Verfahren zum Kalibrieren und Validieren einer Lambdasonde besteht darin, bei stöchiometrischer Verbrennung den (gegebenenfalls gewandelten) Signalwert Aₛₜ der Lambdasonde (Prüfling) mit dem (gegebenenfalls gewandelten) Signalwert Fₘₐₓ einer lonisationselektrode (Normal) zu vergleichen und anhand einer vorgebbaren zulässigen Toleranz zu bewerten. Dazu wird ein überstöchiometrisches Brennstoff-Luft-Gemisch bei laufender Messwerterfassung von Lambdasonde (Abgassignal A) und lonisationselektrode (Flammensignal F) verbrannt und kontinuierlich über der Zeit t mit Brennstoff angereichert. Diese Gemischanfettung führt zunächst zu ansteigenden Flammensignalwerten, dann nach Erreichen eines Maximums zu wieder fallenden Flammensignalwerten. Sobald die Flammensignalwerte wieder fallen wird die Gemischanfettung abgebrochen. Anhand des maximalen Flammensignalwerts Fₘₐₓ wird auf stöchiometrische Verbrennungsverhältnisse (λₛₜ = 1) geschlossen. Der bei Stöchiometrie gemessene Abgassignalwert Aₛₜ bzw. ein aus dem Abgassignalwert in einer angeschlossenen Messwertverarbeitung gewandelter Wert wird mit dem entsprechenden Flammensignalwert bzw. einem aus dem Flammensignalwert in einer angeschlossenen Messwertverarbeitung gewandelten Wert verglichen. Die Abweichung wird bewertet (validiert). Abhängig von der Bewertung werden die Lambdasonde und/oder eventuelle Messprogrammparameter entweder unverändert für den nachfolgenden luftzahlgeregelten Feuerungsbetrieb verwendet (freigegeben) oder neu eingestellt (justiert).

Figur 2 veranschaulicht ein detailliertes erfindungsgemäßes Verfahren zur Kalibrierung und Validierung einer Lambdasonde mit einer lonisationselektrode bei einer luftzahlgeregelten Verbrennung eines Brennstoff-Luft-Gemischs, gekennzeichnet durch eine Abfolge mehrerer Verfahrensschritte. Zunächst wird bei laufender Verbrennung mit überstöchiometrischer Gemischzusammensetzung (Zeitpunkt t₀) der Brennstoffgehalt des Brennstoff-Luft-Gemischs kontinuierlich oder quasi-kontinuierlich über der Zeit t erhöht (damit lässt sich ein Zeitpfeil t auf der Luftzahlachse λ darstellen, mit umgekehrter Richtung). Dabei werden mehrere Abgassignalwerte Aᵢ der Lambdasonde und Flammensignalwerte Fᵢ der lonisationselektrode erfasst (hier dargestellt jeweils 6 Messwerte). Aus dem zeitlichen Verlauf der Abgassignalwerte Aᵢ wird eine den Verlauf näherungsweise beschreibende lineare Gleichung A*(t) vorausberechnet (Ausgleichsgerade, lineare Regression; da die Anfettung des Brennstoff-Luft-Gemischs kontinuierlich und gleichmäßig erfolgt, stellen sich die Funktionen A*(t) wie auch A*(λ) als Gerade dar). Aus dem zeitlichen Verlauf der Flammensignalwerte Fᵢ wird eine den parabelähnlichen Verlauf näherungsweise beschreibende quadratische Gleichung F*(t) vorausberechnet. Alternativ oder ergänzend zur Bildung der F*(t)-Gleichung kann eine Differential- oder Differenzengleichung D*(t) gebildet werden, die die zeitliche Änderung des Flammensignalwerteverlaufs F* oder die zeitliche Änderung der Flammensignalwerteabfolge Fᵢ beschreibt (Bildung einer ersten Ableitung nach der Zeit). In Kenntnis des vorausberechneten Flammensignalwerteverlaufs F*(t) und/oder der vorausberechneten Differentialgleichung D*(t) wird nun ein Zeitpunkt t_{F}* vorausberechnet (ohne dass der Kalibrierzyklus bereits bis dahin vorangeschritten wäre), bei dem der Flammensignalwerteverlauf F* und/oder die Gleichung D* eine stöchiometrische Verbrennung (λₛₜ = 1) beschreiben, also die Stelle t_{F}*, an der F*(t) den maximalen Flammensignalwert Fₘₐₓ bzw. an der die erste Ableitung nach der Zeit, Gleichung D*(t), den Wert Null (in Fₘₐₓ keine F*-Änderung) annimmt. Ebenso wird in Kenntnis des vorausberechneten Abgassignalwerteverlaufs A* ein Zeitpunkt t_{A}* vorausberechnet, bei dem der Abgassignalwerteverlauf A* eine stöchiometrische Verbrennung beschreibt. Dies erfolgt durch Gleichsetzen der A*-Gleichung mit einer Wertangabe Aₛₜ des Lambdasondenherstellers zum Ausgangssignal der Sonde bei stöchiometrischer Verbrennung. In Figur 2 wird angenommen, dass Aₛₜ = 0 ist, zu erkennen an dem vorausberechneten Zeitpunkt t_{A}* mit A*(t_{A}*) = Aₛₜ = 0. Die Grundannahme lautet also, dass die Sonde im tatsächlichen Betrieb eine Herstellerkennlinie wiedergibt. Aufgrund von beispielsweise Alterungserscheinungen kommt es aber zu einer Abweichung zwischen der tatsächlichen Kennlinie und der Herstellerkennlinie. Diese Abweichung wird daran erkannt, dass die beiden vorausberechneten Zeitpunkte t_{F}* und t_{A}* nicht genau übereinstimmen. Der nächste Schritt, der die Validierung einleitet, besteht in einem Vergleich einer Zeitabweichung Δt* = t_{F}* - t_{A}* zwischen den vorausberechneten Zeitpunkten mit einer vorgebbaren maximal zulässigen Zeittoleranz Eₜ. Eine positive Validierung der Lambdasonde ist nun gegeben, wenn die Zeitabweichung Δt* kleiner oder gleich der Zeittoleranz Eₜ ist. Sie wird gefolgt von einem Abbrechen der Gemischanfettung (Zeitpunkt t₁) und Freigabe der Lambdasonde für die luftzahlgeregelte Verbrennung im weiteren Feuerungsbetrieb, wobei eine Sollzusammensetzung des Brennstoff-Luft-Gemischs auf Grundlage von Abgassignalwerten der Lambdasonde eingestellt wird. Eine negative Validierung der Lambdasonde ist dagegen gegeben, wenn die Zeitabweichung Δt* größer als die Zeittoleranz Eₜ ist. Sie wird gefolgt von einem Abbrechen der Erhöhung des Brennstoffgehaltes (Zeitpunkt t₁) und Neujustierung der Lambdasonde.

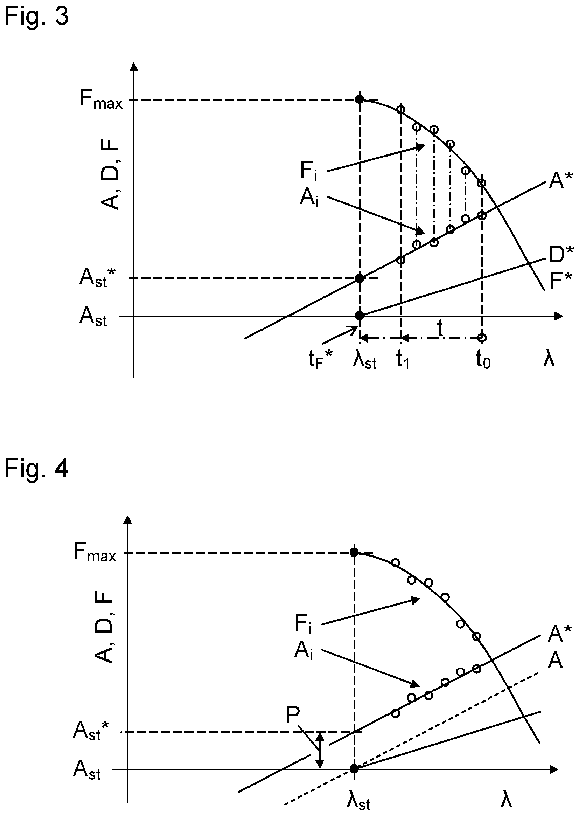

Figur 3 veranschaulicht ein weiteres detailliertes erfindungsgemäßes Verfahren, ebenfalls gekennzeichnet durch eine Abfolge mehrerer Verfahrensschritte. Die ersten Verfahrensschritte, von der Anfettung des Brennstoff-Luft-Gemischs, beginnend zum Zeitpunkt t₀, bis zur Vorausberechnung des Zeitpunktes t_{F}*, bei dem der Flammensignalwerteverlauf F* und/oder die Gleichung D* eine stöchiometrische Verbrennung beschreiben, stimmen mit dem vorbeschriebenen, in Figur 2 veranschaulichten Verfahren überein. Daran anschließend wird, in Kenntnis der Gleichung für den Abgassignalwerteverlauf A*, ein stöchiometrischer Abgassignalwert A*( t_{F}*) = Aₛₜ* vorausberechnet, das ist der vorausberechnete Lambdasonden-Abgassignalwert zum Zeitpunkt des vorausberechneten stöchiometrischen lonisationselektroden-Flammensignales. Dies erfolgt durch Einsetzen des Zeitwertes t_{F}* in die A*-Gleichung (Substitution der Zeitvariablen t_{A}* durch t_{F}*). Die Grundannahme lautet auch hier wieder, dass die Sonde im tatsächlichen Betrieb eine Herstellerkennlinie wiedergibt. Aufgrund von beispielsweise Alterungserscheinungen kommt es aber zu einer Abweichung zwischen der tatsächlichen Kennlinie und der Herstellerkennlinie. Diese Abweichung wird daran erkannt, dass der vorausberechnete stöchiometrische Abgassignalwert Aₛₜ* und der laut Herstellerangaben erwartete stöchiometrische Abgassignalwert Aₛₜ nicht genau übereinstimmen (in Figur 3 wird wieder angenommen, dass Aₛₜ = 0 ist). Der nächste Schritt, der die Validierung einleitet, besteht in einem Vergleich einer Abgassignalwertabweichung zwischen dem vorausberechneten Abgassignalwert Aₛₜ* und dem Herstellerwert Aₛₜ mit einer vorgebbaren maximal zulässigen Abgassignaltoleranz E_{A}. Eine positive Validierung der Lambdasonde ist nun gegeben, wenn die Abgassignalwertabweichung kleiner oder gleich der Abgassignaltoleranz E_{A} ist. Sie wird gefolgt von einem Abbrechen der Gemischanfettung (Zeitpunkt t₁) und Freigabe der Lambdasonde für die luftzahlgeregelte Verbrennung im weiteren Feuerungsbetrieb, wobei eine Sollzusammensetzung des Brennstoff-Luft-Gemischs auf Grundlage von Abgassignalwerten der Lambdasonde eingestellt wird. Eine negative Validierung der Lambdasonde ist dagegen gegeben, wenn die Abgassignalwertabweichung größer als die Abgassignaltoleranz E_{A} ist. Sie wird gefolgt von einem Abbrechen der Erhöhung des Brennstoffgehaltes (Zeitpunkt t₁) und einer Neujustierung der Lambdasonde.

In Figur 4 ist ein erfindungsgemäßes Verfahren zur Justierung einer Lambdasonde dargestellt. Die Justierung erfolgt demnach auf der Ebene eines Datenverarbeitungsprogramms oder einer Software. Aus den Kennlinien und Werten des Kalibrier- und Validierverfahrens wird ein Parameter berechnet, der für einen der Justierung nachfolgenden luftzahlgeregelten Verbrennungsbetrieb in die Weiterverarbeitung der Messdaten (z.B. Wandlung, Umrechnung, Bewertung und/oder Skalierung der Abgassignalwerte A₁) eingeht. Hier dargestellt ist ein Parameter P, der aus einem Offset, wie er zwischen einer ersten Lamdasondenkennlinie und einer während des Kalibrierzyklus ermittelten zweiten Lambdasondenkennlinie besteht, ermittelt wird. Die erste Kennlinie kann beispielsweise eine vom Hersteller angegebene Abgassignalkennlinie A sein. Die zweite Kennlinie kann beispielsweise der wie vorstehend beschrieben vorausberechnete Abgassignalwerteverlauf A* sein.

### Bezugszeichenliste

- A: Abgassignal allgemein bzw. Herstellerkennlinie
- Aₛₜ: erwarteter stöchiometrischer Abgassignalwert (Referenzwert, beispielsweise Herstellerangabe)
- Aᵢ: Abgassignalwerte (Messwerte)
- A*, A*(t): vorausberechneter Abgassignalwerteverlauf
- Aₛₜ*: vorausberechneter stöchiometrischer Abgassignalwert
- K_{A}*: vorausberechneter Kalibrierpunkt, allgemein
- Fᵢ: Flammensignalwerte (Messwerte)
- F*, F*(t): vorausberechneter Signalwerteverlauf
- Fₘₐₓ: maximaler Flammensignalwert (stöchiometrische Verbrennung)
- Fₛₜ*: vorausberechneter stöchiometrischer Flammensignalwert
- K_{F}*: vorausberechneter Kalibrierpunkt allgemein
- D*, D*(t): vorausberechnete Differential- bzw. Differenzengleichung
- t₀: Startpunkt des Kalibrier- und Validierzyklus
- t₁: Endpunkt des Kalibrier- und Validierzyklus
- t_{F}*: vorausberechneter Zeitpunkt, bei dem F*(t) u/o D*(t) eine stöchiometrische Verbrennung beschreiben
- t_{A}*: vorausberechneter Zeitpunkt, bei dem A*(t) eine stöchiometrische Verbrennung beschreibt
- Eₜ: vorgebbare maximal zulässige Zeittoleranz
- E_{A}: vorgebbare maximal zulässige Abgassignaltoleranz
- λₛₜ: Luftzahl bei stöchiometrischer Verbrennung (λₛₜ = 1)

## Patentansprüche

1. Verfahren zur Kalibrierung und Validierung einer Lambdasonde mit einer lonisationselektrode bei einer luftzahlgeregelten Verbrennung eines Brennstoff-Luft-Gemischs,
wobei die Lambdasonde Abgaswerte der Verbrennung misst und zugeordnete Abgassignalwerte Aᵢ, die einer Luftzahlregelung dienen, an ein Regelgerät ausgibt,
wobei die lonisationselektrode Flammenwerte der Verbrennung misst und zugeordnete Flammensignalwerte Fᵢ, die der Validierung der Lambdasonde dienen, an ein Regelgerät ausgibt, und
wobei in einem Kalibrierzyklus, beginnend bei überstöchiometrischer Gemischzusammensetzung, eine vorübergehende Veränderung der Gemischzusammensetzung erfolgt, **dadurch gekennzeichnet,**
• **dass** während des Kalibrierzyklus bei Veränderung der Zusammensetzung des überstöchiometrischen Brennstoff-Luft-Gemischs aus erfassten Signalwerten (Aᵢ , Fᵢ) mindestens ein Kalibrierpunkt (K_{A}*, K_{F}*) und/oder mindestens ein Signalwerteverlauf (A*, F*), die den Bereich der überstöchiometrischen Verbrennung und/oder den Bereich der stöchiometrischen Verbrennung beschreiben, vorausberechnet werden, und
• **dass** anhand des mindestens einen Kalibrierpunkts (K_{A}*, K_{F}*) und/oder des mindestens einen Signalwerteverlaufs (A*, F*) eine Validierung der Lambdasonde durchgeführt wird, indem eine Abweichung von einem Referenzwert bewertet wird,
und **dass** bei positiver Validierung die Lambdasonde für die luftzahlgeregelte Verbrennung freigegeben wird, und bei negativer Validierung die Lambdasonde neu justiert wird.

2. Verfahren nach Anspruch 1,
**dadurch gekennzeichnet, dass** die vorübergehende Veränderung der Gemischzusammensetzung eine Anreicherung des Brennstoff-Luft-Gemischs mit Brennstoff umfasst.

3. Verfahren nach Anspruch 1 oder 2,
**dadurch gekennzeichnet, dass** der Brennstoffgehalt während der Anreicherung des Brennstoff-Luft-Gemischs kontinuierlich oder quasi-kontinuierlich und gleichmäßig über der Zeit erhöht wird.

4. Verfahren nach einem der voranstehenden Ansprüche,
**dadurch gekennzeichnet, dass** der mindestens eine Kalibrierpunkt (K_{A}*, K_{F}*) einen vorausberechneten Abgassignalwert Aₛₜ* und/oder Flammensignalwert Fₛₜ* beschreibt, die voraussichtlich bei stöchiometrischer Verbrennung vorliegen.

5. Verfahren nach einem der voranstehenden Ansprüche,
**dadurch gekennzeichnet, dass** der mindestens eine Kalibrierpunkt (K_{A}*, K_{F}*) einen vorausberechneten Zeitpunkt (t_{A}*, t_{F}*) beschreibt, bei dem voraussichtlich eine stöchiometrische Verbrennung vorliegt.

6. Verfahren nach einem der voranstehenden Ansprüche,
**dadurch gekennzeichnet, dass** die Vorausberechnung des mindestens einen Kalibrierpunktes (K_{A}*, K_{F}*) und/oder des mindestens einen Signalwerteverlaufes (A*, F*) die Bildung einer die zeitliche Änderung des Flammensignalwerteverlaufs F* beschreibenden Differentialgleichung oder Differenzengleichung D* umfasst, wobei die Differentialgleichung oder Differenzengleichung D* für stöchiometrische Verbrennungsverhältnisse den Wert Null annimmt.

7. Verfahren nach einem der voranstehenden Ansprüche,
**dadurch gekennzeichnet, dass** sich die Vorausberechnung des mindestens einen Kalibrierpunktes (K_{A}*, K_{F}*) und/oder des mindestens einen Signalwerteverlaufes (A*, F*) auf ein statistisches Verfahren stützt.

8. Verfahren nach einem der voranstehenden Ansprüche,
**dadurch gekennzeichnet, dass** sich die Validierung der Lambdasonde auf einen anhand einer vorgebbaren zulässigen Toleranz bewerteten Vergleich der Kalibrierpunkte (K_{A}*, K_{F}*) stützt.

9. Verfahren zur Kalibrierung und Validierung einer Lambdasonde mit einer Ionisationselektrode bei einer luftzahlgeregelten Verbrennung eines Brennstoff-Luft-Gemischs nach einem der voranstehenden Ansprüche,
**gekennzeichnet durch** die Verfahrensschritte
a. kontinuierliches oder quasi-kontinuierliches Erhöhen des Brennstoffgehalts des Brennstoff-Luft-Gemischs über der Zeit bei überstöchiometrischer Gemischzusammensetzung,
b. Erfassen von Abgassignalwerten Aᵢ der Lambdasonde und von Flammensignalwerten Fᵢ der lonisationselektrode,
c. Bildung einer den zeitlichen Verlauf der Abgassignalwerte Aᵢ näherungsweise beschreibenden Gleichung A*,
d. Bildung einer den zeitlichen Verlauf der Flammensignalwerte Fᵢ näherungsweise beschreibenden Gleichung F*,
e. alternativ oder ergänzend zu Schritt d Bildung einer die zeitliche Änderung des Flammensignalwerteverlaufs F* oder die zeitliche Änderung der Flammensignalwerteabfolge Fᵢ beschreibenden Gleichung D*,
f. Vorausberechnen eines Zeitpunktes t_{F}*, bei dem der Flammensignalwerteverlauf F* und/oder die Gleichung D* eine stöchiometrische Verbrennung beschreiben,
g. Vorausberechnen eines Zeitpunktes t_{A}*, bei dem der Abgassignalwerteverlauf A* eine stöchiometrische Verbrennung beschreibt,
h. Vergleich einer Zeitabweichung Δt* zwischen den Zeitpunkten mit einer vorgebbaren zulässigen Zeittoleranz Eₜ, wobei
i. bei einer Zeitabweichung Δt* kleiner oder gleich der Zeittoleranz Eₜ Abbrechen der Erhöhung des Brennstoffgehaltes und Freigabe der Lambdasonde für die luftzahlgeregelte Verbrennung,
j. bei einer Zeitabweichung Δt* größer der Zeittoleranz Eₜ Abbrechen der Erhöhung des Brennstoffgehaltes und Neujustierung der Lambdasonde.

10. Verfahren zur Kalibrierung und Validierung einer Lambdasonde mit einer lonisationselektrode bei einer luftzahlgeregelten Verbrennung eines Brennstoff-Luft-Gemischs nach einem der voranstehenden Ansprüche,
**gekennzeichnet durch** die Verfahrensschritte a bis f nach Anspruch 9 sowie den weiteren Verfahrensschritten
g. Vorausberechnen eines stöchiometrischen Abgassignalwertes Aₛₜ* zum Zeitpunkt t_{F}*,
h. Vergleich einer Abgassignalwertabweichung des Abgassignalwertes Aₛₜ* von einem Referenzwert Aₛₜ mit einer vorgebbaren zulässigen Abgassignaltoleranz E_{A}, wobei
i. bei einer Abgassignalwertabweichung kleiner oder gleich der Abgassignaltoleranz E_{A} Abbrechen der Erhöhung des Brennstoffgehaltes und Freigabe der Lambdasonde für die luftzahlgeregelte Verbrennung,
j. bei einer Abgassignalwertabweichung größer der Abgassignaltoleranz E_{A} Abbrechen der Erhöhung des Brennstoffgehaltes und Justierung der Lambdasonde.

11. Verfahren zur Justierung einer Lambdasonde bei einer luftzahlgeregelten Verbrennung eines Brennstoff-Luft-Gemischs beinhaltend eine Kalibrierung und Validierung nach einem der Ansprüche 1 bis 10,
**dadurch gekennzeichnet, dass** die Justierung auf der Ebene eines Datenverarbeitungsprogramms erfolgt sowie die Berechnung und Vorgabe mindestens eines Parameters umfasst, der in einem der Justierung nachfolgenden luftzahlgeregelten Verbrennungsbetrieb einer programminternen Verarbeitung der Abgassignalwerte Aᵢ der Lambdasonde zugrunde gelegt wird.

12. Verfahren nach Anspruch 11,
**dadurch gekennzeichnet, dass** der Parameter aus einem zwischen einer ersten Lamdasondenkennlinie und einer während des Kalibrierzyklus ermittelten zweiten Lambdasondenkennlinie bestehenden Offset ermittelt wird.

13. Verfahren zur luftzahlgeregelten Verbrennung eines Brennstoff-Luft-Gemischs,
mit einer in einem Abgaseinflussbereich angeordneten Lambdasonde, die Abgaswerte misst und zugeordnete Abgassignalwerte, die einer Luftzahlregelung zugrunde gelegt werden, ausgibt,
mit einer in einem Flammeneinflussbereich angeordneten lonisationselektrode, die Flammenwerte misst und zugeordnete Flammensignalwerte, die einer Justierung der Lambdasonde zugrunde gelegt werden, ausgibt,
**dadurch gekennzeichnet, dass** zur Kalibrierung, Validierung und/oder Justierung der Lambdasonde mindestens ein Verfahren nach einem der Ansprüche 1 bis 12 angewendet wird.

## Claims

1. Method for calibrating and validating a lambda probe having an ionization electrode during air-ratio-controlled combustion of a fuel/air mixture,
wherein the lambda probe measures exhaust gas values of the combustion and outputs assigned exhaust gas signal values Ai which serve for air ratio control,
wherein the ionization electrode measures flame values of the combustion and outputs assigned flame signal values Fi, which serve to validate the lambda probe, to a control device, and
wherein a temporary change in the mixture composition takes place in a calibration cycle, starting at an over-stoichiometric mixture composition,
**characterized**
• **in that** when the composition of the over-stoichiometric fuel/air mixture is changed during the calibration cycle, at least one calibration point (K_{A}*, K_{F}*) and/or at least one signal value profile (A*, F*), which describe the range of the over-stoichiometric combustion and/or the range of the stoichiometric combustion, are calculated previously from acquired signal values (Aᵢ, Fᵢ), and
• **in that** a validation of the lambda probe is carried out on the basis of the at least one calibration point (K_{A}*, K_{F}*) and/or of the at least one signal value profile (A*, F*) by evaluating a deviation from a reference value,
and **in that** in the case of positive validation the lambda probe is released for the air-ratio-controlled combustion, and in the case of negative validation the lambda probe is re-adjusted.

2. Method according to Claim 1,
**characterized in that** the temporary change in the mixture composition comprises enrichment of the fuel/air mixture with fuel.

3. Method according to Claim 1 or 2,
**characterized in that** the fuel content is increased continuously or quasi-continuously and uniformly over time during the enrichment of the fuel/air mixture.

4. Method according to one of the preceding claims,
**characterized in that** the at least one calibration point (K_{A}*, K_{F}*) describes a previously calculated exhaust gas signal value Aₛₜ* and/or flame signal value Fₛₜ* which are anticipated to occur during stoichiometric combustion.

5. Method according to one of the preceding claims,
**characterized in that** the at least one calibration point (K_{A}*, K_{F}*) describes a previously calculated time (t_{A}*, t_{F}*) at which stoichiometric combustion is anticipated to occur.

6. Method according to one of the preceding claims,
**characterized in that** the previous calculation of the at least one calibration point (K_{A}*, K_{F}*) and/or of the at least one signal value profile (A*, F*) comprises the formation of a differential equation D* which describes the change in the flame signal value profile F* over time, wherein the differential equation D* assumes the value zero for stoichiometric combustion conditions.

7. Method according to one of the preceding claims, **characterized in that** the previous calculation of the at least one calibration point (K_{A}*, K_{F}*) and/or of the at least one signal value profile (A*, F*) is based on a statistical method.

8. Method according to one of the preceding claims,
**characterized in that** the validation of the lambda probe is based on a comparison of the calibration points (K_{A}*, K_{F}*) which is evaluated using a predefinable permissible tolerance.

9. Method for calibrating and validating a lambda probe having an ionization electrode during air-ratio-controlled combustion of a fuel/air mixture according to one of the preceding claims,
**characterized by** the method steps
a. continuous or quasi-continuous increasing of the fuel content of the fuel/air mixture over time in the case of an over-stoichiometric mixture composition,
b. acquiring exhaust gas signal values Ai of the lambda probe and acquiring flame signal values Fᵢ of the ionization electrode,
c. forming an equation A* which approximately describes the time profile of the exhaust gas signal values Aᵢ,
d. forming an equation F* which approximately describes the time profile of the flame signal values Fi,
e. as an alternative or in addition to step d, forming an equation D* which describes the change in the flame signal value profile F* over time or the change in the flame signal value sequence Fᵢ over time,
f. previously calculating a time t_{F}* at which the flame signal value profile F* and/or the equation D* describe/describes stoichiometric combustion,
g. previously calculating a time t_{A}* at which the exhaust gas signal value profile A* describes stoichiometric combustion,
h. comparing a time deviation Δt* between the times with a predefinable permissible time tolerance Et, wherein
i. in the case of a time deviation Δt* which is less than or equal to the time tolerance Et, aborting the increasing of the fuel content and releasing the lambda probe for the air-ratio-controlled combustion,
j. in the case of a time deviation Δt* which is greater than the time tolerance Et, aborting the increasing of the fuel content and re-adjusting the lambda probe.

10. Method for calibrating and validating a lambda probe having an ionization electrode during air-ratio-controlled combustion of a fuel/air mixture according to one of the preceding claims,
**characterized by** the method steps a to f according to Claim 9 and the further method steps
g. previously calculating a stoichiometric exhaust gas signal value Aₛₜ* at the time t_{F}*,
h. comparing an exhaust gas signal value deviation of the exhaust gas signal value Aₛₜ* from a reference value Aₛₜ with a predefinable permissible exhaust gas signal tolerance E_{A}, wherein
i. in the case of an exhaust gas signal value deviation which is less than or equal to the exhaust gas signal tolerance E_{A}, aborting the increasing of the fuel content and releasing the lambda probe for the air-ratio-controlled combustion,
j. in the case of an exhaust gas signal value deviation which is greater than the exhaust gas signal tolerance E_{A}, aborting the increasing of the fuel content and adjusting the lambda probe.

11. Method for adjusting a lambda probe during air-ratio-controlled combustion of a fuel/air mixture, comprising calibration and validation according to one of Claims 1 to 10,
**characterized in that** the adjustment takes place at the level of a data processing program and comprises the calculation and predefinition of at least one parameter which is used as the basis for program-internal processing of the exhaust gas signal values Ai of the lambda probe in an air-ratio-controlled combustion operation following the adjustment.

12. Method according to Claim 11,
**characterized in that** the parameter is determined from an offset which is present between a first lambda probe characteristic curve and a second lambda probe characteristic curve which is determined during the calibration cycle.

13. Method for air-ratio-controlled combustion of a fuel/air mixture, having a lambda probe which is arranged in an exhaust gas inflow region, which lambda probe measures exhaust gas values and outputs assigned exhaust gas signal values which are used as the basis for an air-ratio-control process,
having an ionization electrode which is arranged in a flame inflow region, which ionization electrode measures flame values and outputs assigned flame signal values which are used as the basis for adjustment of the lambda probe,
**characterized in that** at least one method according to one of Claims 1 to 12 is applied for calibrating, validating and/or adjusting the lambda probe.

## Revendications

1. Procédé, destiné à l'étalonnage et à la validation d'une sonde lambda à l'aide d'une électrode d'ionisation, lors d'une combustion à régulation d'indice d'air d'un mélange air/carburant,
la sonde lambda mesurant des valeurs de gaz d'échappement de la combustion et délivrant à un instrument de réglage des valeurs de signaux de gaz d'échappement Ai associées, qui servent à une régulation de l'indice d'air,
l'électrode d'ionisation mesurant des valeurs de flamme de la combustion et délivrant à un instrument de réglage des valeurs de signaux de flamme Fi associées, qui servent à la validation de la sonde lambda et
lors d'un cycle d'étalonnage, commençant avec une composition sur-stoechiométrique du mélange, une variation provisoire de la composition du mélange ayant lieu
**caractérisé**
• **en ce que** pendant le cycle d'étalonnage, lors de la variation de la composition du mélange air/carburant sur-stoechiométrique, à partir de valeurs de signaux (Aᵢ, Fᵢ) détectées, au moins un point d'étalonnage (K_{A}*, K_{F}*) et/ou au moins une courbe de valeurs de signaux (A*, F*), qui décrivent la plage de la combustion sur-stoechiométrique et/ou la plage de la combustion stoechiométrique sont précalculés, et
• **en ce qu'**à l'aide de l'au moins un point d'étalonnage (K_{A}*, K_{F}*) et/ou de l'au moins une courbe de valeurs de signaux (A*, F*), il est procédé à une validation de la sonde lambda, en ce qu'un écart par rapport à une valeur de référence est évalué,
• et **en ce que** dans le cas d'une validation positive, la sonde lambda est libérée pour la combustion à régulation d'indice d'air et dans le cas d'une validation négative, la sonde lambda est réajustée.

2. Procédé selon la revendication 1, **caractérisé en ce que** la variation provisoire de la composition du mélange comprend un enrichissement en carburant du mélange air/carburant.

3. Procédé selon la revendication 1 ou 2, **caractérisé en ce que** la teneur en carburant pendant l'enrichissement du mélange air/carburant est augmentée continuellement ou quasi-continuellement et régulièrement dans le temps.

4. Procédé selon l'une quelconque des revendications précédentes,
**caractérisé en ce que** l'au moins un point d'étalonnage (K_{A}*, K_{F}*) décrit une valeur de signaux de gaz d'échappement Aₛₜ* et/ou une valeur de signaux de flamme Fₛₜ* qui sont vraisemblablement présentes dans le cas d'une combustion stoechiométrique.

5. Procédé selon l'une quelconque des revendications précédentes,
**caractérisé en ce que** l'au moins un point d'étalonnage (K_{A}*, K_{F}*) décrit un moment (t_{A}*, t_{F}*) précalculé, lors duquel on est vraisemblablement en présence d'une combustion stoechiométrique.

6. Procédé selon l'une quelconque des revendications précédentes,
**caractérisé en ce que** le pré-calcul de l'au moins un point d'étalonnage (K_{A}*, K_{F}*) et/ou de l'au moins une courbe de valeurs de signaux (A*, F*) comprend la création d'une équation différentielle ou équation de différence D* décrivant la variation dans le temps de la courbe de valeurs de signaux de flamme F*, l'équation différentielle ou équation de différence D* adoptant la valeur de zéro dans le cas de conditions de combustion stoechiométriques.

7. Procédé selon l'une quelconque des revendications précédentes,
**caractérisé en ce que** le précalcul de l'au moins un point d'étalonnage (K_{A}*, K_{F}*) et/ou de l'au moins une courbe de valeurs de signaux (A*, F*) s'appuie sur un procédé statistique.

8. Procédé selon l'une quelconque des revendications précédentes,
**caractérisé en ce que** la validation de la sonde lambda s'appuie sur une comparaison des points d'étalonnage (K_{A}*, K_{F}*) évaluée à l'aide d'une tolérance prédéfinissable autorisée.

9. Procédé, destiné à l'étalonnage et à la validation d'une sonde lambda à l'aide d'une électrode d'ionisation, lors d'une combustion à régulation d'indice d'air d'un mélange air/carburant selon l'une quelconque des revendications précédentes, **caractérisé par** les étapes de procédé consistant à :
a. augmenter de manière continuelle ou quasi-continuelle la teneur en carburant du mélange air/carburant lorsque la composition du mélange est sur-stoechiométrique,
b. détecter des valeurs de signaux de gaz d'échappement Ai de la sonde lambda et des valeurs de signaux de flamme Fi de l'électrode d'ionisation,
c. créer un équation A* décrivant approximativement la courbe dans le temps des valeurs de signaux de gaz d'échappement Ai,
d. créer une équation F* décrivant approximativement la courbe dans le temps des valeurs de signaux de flamme Fi,
e. en variante ou en complément de l'étape d, créer une équation D* décrivant la variation dans le temps de la courbe de valeurs de signaux de flamme F* ou la variation dans le temps de la séquence de valeurs de signaux de flamme Fi,
f. précalculer un moment t_{F}*, auquel la courbe de valeur de signaux de flamme F* et/ou l'équation D* décrivent une combustion stoechiométrique,
g. précalculer un moment t_{A}*, auquel la courbe de valeurs de signaux de gaz d'échappement A* décrit une combustion stoechiométrique,
h. comparer un écart de temps Δt* entre les moments avec une marge de temps Et prédéfinissable autorisée,
i. dans le cas d'un écart de temps Δt* inférieur ou égal à la marge de temps Et, abandonner l'augmentation de la teneur en carburant et libérer la sonde lambda pour la combustion régulée par indice d'air,
j. dans le cas d'un écart de temps Δt* supérieur à la marge de temps Eₜ, abandonner l'augmentation de la teneur en carburant et réajuster la sonde lambda.

10. Procédé, destiné à l'étalonnage et à la validation d'une sonde lambda à l'aide d'une électrode d'ionisation, lors d'une combustion à régulation d'indice d'air d'un mélange air/carburant selon l'une quelconque des revendications précédentes, **caractérisé par** les étapes de procédé a à f selon la revendication 9, ainsi que par les étapes de procédés supplémentaires, consistant à :
g. précalculer une valeur de signaux de gaz d'échappement Aₛₜ* stoechiométrique au moment t_{F}*,
h. comparer un écart entre la valeur de signaux de gaz d'échappement Aₛₜ* et une valeur de référence Aₛₜ avec une tolérance prédéfinissable autorisée de signaux de gaz d'échappement E_{A},
i. dans le cas d'un écart des valeurs de signaux de gaz d'échappement inférieur ou également à la tolérance de signaux de gaz d'échappement E_{A}, abandonner l'augmentation de la teneur en carburant et libérer la sonde lambda pour la combustion régulée par indice d'air,
j. dans le cas d'un écart des valeurs de signaux de gaz d'échappement supérieur à la tolérance de signaux de gaz d'échappement E_{A}, abandonner l'augmentation de la teneur en carburant et ajuster la et sonde lambda.

11. Procédé, destiné à l'ajustement d'une sonde lambda lors d'une combustion à régulation d'indice d'air d'un mélange air/carburant, comprenant un étalonnage et une validation selon l'une quelconque des revendications 1 à 10,
**caractérisé en ce que** l'ajustement a lieu au niveau d'un programme de traitement de données et comprend le calcul et la prédéfinition d'au moins un paramètre, qui dans un mode de combustion régulé par indice d'air consécutif à l'ajustement sert de base à un traitement interne au programme des valeurs de signaux de gaz d'échappement Ai de la sonde lambda.

12. Procédé selon la revendication 11, **caractérisé en ce que** le paramètre est déterminé à partir d'un décalage présent entre une première courbe
caractéristique de la sonde lambda et une deuxième courbe caractéristique de la sonde lambda, déterminée pendant le cycle d'étalonnage.

13. Procédé, destiné à la combustion régulée par indice d'air d'un mélange air/carburant,
avec une sonde lambda placée dans une zone d'influence des gaz d'échappement, qui mesure des valeurs de gaz d'échappement et délivre des valeurs de signaux de gaz d'échappement associées, qui servent de base à une régulation de l'indice d'air,
avec une électrode d'ionisation, placée dans une zone d'influence des flammes, qui mesure des valeurs de flamme et délivre des valeurs de signaux de flamme associées, qui servent de base pour un ajustement de la sonde lambda,
**caractérisé en ce que** pour l'étalonnage, la validation et/ou l'ajustement de la sonde lambda, on utilise au moins un procédé selon l'une quelconque des revendications 1 à 12.
